# EUROPÄISCHE PATENTSCHRIFT

(11) **EP 3 610 759 B1**
(45) Veröffentlichungstag und Bekanntmachung des Hinweises auf die Patenterteilung: **17.11.2021**
(21) Anmeldenummer: 19020465.1
(22) Anmeldetag: 12.08.2019
(51) Int. Cl.: A47C 4/02, B27M 3/00

(54) **MÖBELSTÜCK**
PIECE OF FURNITURE
MEUBLE

(30) Priorität: 15.08.2018 DE 202018104679 U
(43) Veröffentlichungstag der Anmeldung: 19.02.2020
(73) Patentinhaber: Gwozdz, Ronald, 59590 Geseke (DE)
(72) Erfinder: Gwozdz, Ronald, 59590 Geseke (DE)
(74) Vertreter: Ostermann, Thomas

(56) Entgegenhaltungen:
- WO-A1-2014/032200
- US-A- 4 235 473
- US-A- 4 608 798

## Beschreibung

Die Erfindung betrifft ein Möbelstück nach dem Oberbegriff des Patentanspruchs 1.

Aus der DE 20 2011 051 005 U1 ist ein Möbelstück bekannt, das als eine Sitzbank mit Holzstreben ausgebildet ist, wobei die Holzstreben über als Verbindungsstreben ausgebildete Verbindungsmittel beabstandet zueinander angeordnet sind zur Bildung einer Sitzfläche und/oder Rückenlehne. Wenn die Holzstreben aus einem Massiv- oder Vollholzmaterial hergestellt sind, wird die Lebensdauer des Möbelstücks dadurch beschränkt, dass sich die Holzstreben mit der Zeit verziehen und damit das Möbelstück die ursprüngliche Form verliert.

Aus der DE 20 2011 001 552 U1 ist ein Möbelstück bekannt, das Holzstreben aus einem Massiv- bzw. Vollholzmaterial aufweist. Die Holzstreben sind aneinander liegend und miteinander verklebt ausgebildet. Zur weiteren Erhöhung der Steifigkeit weist die Massivholzplatte einen langgestreckten Hohlraum auf, so dass ein Verstärkungskörper quer zur Holzfaser in die Massivholzplatte eingesetzt werden kann. Nachteilig an dem bekannten Möbelstück ist, dass sich bei Verwendung desselben im Außenbereich Wasser auf einer Oberseite des Möbelstücks sammeln kann, was nicht abfließen kann. Hierdurch kann sich das Material in unerwünschter Weise verziehen.

Aus der US 4 608 798 A ist ein Möbelstück, nämlich eine Bank, bekannt, bei der eine Mehrzahl von Holzstreben über Verbindungsstifte miteinander verbunden sind. Durch Deformation der Verbindungsstifte erfolgt eine Befestigung der Holzstreben.

Aus der WO 2014/032200 A1 ist ein Möbelstück mit mehreren beabstandet zueinander angeordneten Holzstreben bekannt, die über eine Verbindungsstange miteinander verbunden sind. Nachteilig an dem bekannten Möbelstück ist, dass die als Gewindestange ausgebildete Verbindungsstange mit allen Holzstreben in Schraubverbindung steht, so dass eine Demontage erschwert wird.

Aufgabe der vorliegenden Erfindung ist es daher, ein Möbelstück aus einem Massiv- bzw. Vollholzmaterial derart weiterzubilden, dass seine Langzeitstabilität bzw. Lebensdauer weiter verbessert wird, wobei insbesondere eine gleichbleibend hohe Formstabilität gewährleistet ist.

Zur Lösung dieser Aufgabe weist Erfindung die Merkmale des Patentanspruchs 1 auf.

Der besondere Vorteil der Erfindung besteht darin, dass formstabile Möbelstücke, insbesondere Sitzmöbel, aus Massiv- bzw. Vollholzmaterial mit hoher Formstabilität und langer Lebensdauer bereitgestellt werden können. Durch eine in einem Hohlraum der Holzstreben fixierten Gewindestange kann die Formstabilität erhöht werden. Dadurch, dass zwischen den Holzstreben ein Spalt gebildet ist, kann sich auf einer Flachseite eines aus den verbundenen Holzstreben gebildeten Bauteils sammelndes Wasser abfließen. Die Gefahr des Verziehens und Verbiegens aufgrund des Eindringens von Feuchtigkeit in die Holzstreben wird vermieden. Die Gewindestange kann relativ einfach durch Verdrehen um ihre Längsachse in dem Hohlraum der Holzstreben fixiert werden. Beispielsweise wird der Hohlraum durch Vorbohren erzeugt, woraufhin durch Verdrehen der Gewindestange eine kraftschlüssige Verbindung zwischen der Gewindestange und den Holzstreben erzielt wird. Nach der Erfindung ist die Gewindestange mit einer ersten endseitigen Holzstrebe über ein fest mit derselben verbundenen Gewindeeinsatzelement und mit einer zweiten endseitigen Holzstrebe über eine an einer Anschlagfläche derselben anliegenden Befestigungsmutter verbunden. Das Gewindeeinsatzelement dient zur axialen Fixierung der Gewindestange in der ersten endseitigen Holzstrebe. Die Befestigungsmutter dient zum Einspannen der zweiten endseitigen Holzstrebe in Relation zu den weiteren Holzstreben. Vorteilhaft wird hierdurch eine einfache und schnelle sowie sichere Befestigung der Holzstrebenanordnung bewirkt.

Nach einer Weiterbildung der Erfindung wird die Gewindestange derart relativ zu den benachbart zueinander angeordneten Holzstreben eingebracht, dass ein lichter Abstand zwischen benachbarten Holzstreben im Bereich von 25 mm bis 45 mm liegt. Der lichte Abstand ermöglicht eine Kanalbildung, über die Wasser von einem vorzugsweise horizontal angeordneten flächigen Bauteil abfließen kann.

Nach einer Weiterbildung der Erfindung ist die Verbindungsstange im Bereich des Spalts von einem Distanzelement, vorzugsweise von einer Distanzscheibe umgeben. Eine Wanddicke des Distanzelementes legt die Spaltbreite benachbarter Holzstreben fest. Vorteilhaft kann hierdurch eine definierte Spaltbreite vorgegeben werden.

Nach einer Weiterbildung der Erfindung ist die Gewindestange mit Spiel durch die fluchtend zueinander angeordneten Bohrungen der vorzugsweise in einer Ebene angeordneten Holzstreben durchsteckbar. Vorteilhaft erfolgt die Befestigung der Holzstreben miteinander zur Bildung eines flächigen Bauteils lediglich an Enden der Gewindestange. Vorteilhaft ist das flächige Bauteil auf einfache Weise zusammensetzbar bzw. montierbar sowie zerlegbar bzw. demontierbar. Vorteilhaft kann somit im Gastrobereich das flächige Bauteil in der Sommersaison aufgebaut und in der Wintersaison platzsparend in einem Lager unter Stapelung der Holzstreben gelagert werden. Dadurch, dass das flächige Bauteil durch eine Mehrzahl von vorzugsweise gleichen Holzstreben zusammengesetzt ist, wird nicht nur die Montage und Demontage vereinfacht, sondern auch der Transport. Im demontierten Zustand des Bauteils brauchen lediglich die langgestreckten Holzstreben sowie die wenigen Gewindestangen transportiert werden. Der Durchmesser der Gewindestange liegt im Bereich zwischen 14 mm bis 20 mm. Die Bohrung hat einen Durchmesser, die vorzugsweise um 0,5 mm größer ist als der Durchmesser der Gewindestange, so dass diese mit Spiel in die Bohrung ein- und durchsetzbar ist.

Nach einer Weiterbildung der Erfindung ist dem flächigen Bauteil eine Leuchteinrichtung zugeordnet mit einer Anzahl von Lichtquellen und einem den Lichtquellen zugeordneten Solarelement zur Bereitstellung von elektrischer Energie. Vorteilhaft kann hierdurch autark eine Beleuchtung der Holzstreben und/oder eines benachbarten Feldes des Bauteils und/oder des Bodens erzielt werden.

Nach einer Weiterbildung der Erfindung ist eine Bodenverankerungseinrichtung vorgesehen, mittels derer das flächige Bauteil an einem Boden fixierbar ist. Das Bauteil kann somit beispielsweise als Trennwand zur Abtrennung von Räumen oder Raumbereichen dienen. Auch Sitzmöbel und dergleichen können auf diese Weise mit dem Boden fixiert sein, so dass ein unerwünschtes Entfernen des Sitzmöbels verhindert wird. Vorteilhaft kann hierdurch auch einem Diebstahl der Möbelteile, die vorzugsweise im Gastrobereich eingesetzt werden, vorgebeugt werden.

Nach einer Weiterbildung der Erfindung werden Oberflächen der Holzstreben mit einem Holzöl versehen oder mit einem wasserbasierten Acrylat-Lack beschichtet. Das Holzöl dringt tief in die Holzporen ein und schützt die Holzstrebe. Der Acrylat-Lack bildet eine dünne Beschichtung, die die Holzstrebe schützt. Auf diese Weise haben die Holzstreben eine lange Lebensdauer. Durch den Acrylat-Lack können die Holzstreben auch in verschiedenen Farben erscheinen, so dass die Variation der Erscheinungsform der Sitzmöbel bzw. der Trennwand erhöht wird.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:

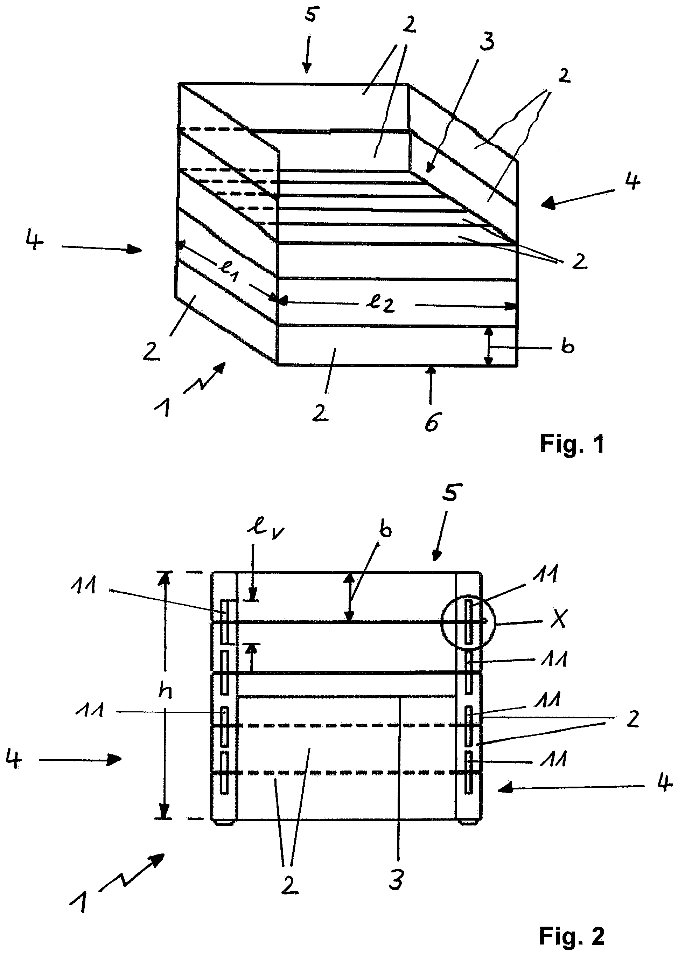

- Figur 1: eine schematische perspektivische Darstellung eines kastenförmigen Sitzmöbelstücks,
- Figur 2: einen Vertikalschnitt des Sitzmöbelstücks von vorne gesehen,
- Figur 3: einen vergrößerten Teilschnitt einer Einzelheit X des Sitzmöbelstücks gemäß Figur 2,
- Figur 4: einen Vertikalschnitt des Sitzmöbelstücks von hinten gesehen mit eingezeichneten Befestigungsmitteln,
- Figur 5: eine Draufsicht des Sitzmöbelstücks,
- Figur 6: einen Vertikalschnitt des Sitzmöbelstücks von vorne gesehen nach einer alternativen Ausführungsform,
- Figur 7: eine Einzelheit Y gemäß Figur 5,
- Figur 8: eine Seitenansicht eines flächenhaften Bauteils nach einer weiteren Ausführungsform der Erfindung mit einer durchgehenden Gewindestange,
- Figur 9: eine vergrößerte Darstellung eines in einer oberen Holzstrebe des Bauteils eingefasstem Gewindeeinsatzelement nach Figur 8,
- Figur 10: eine Untensicht einer unteren Holzstrebe des Bauteils gemäß Figur 8 mit in einer Aussparung angeordneten Mutter zur Schraubverbindung mit der Gewindestange,
- Figur 11: eine Bodenverankerungseinrichtung für das Bauteil gemäß Figur 8 und
- Figur 12: eine weitere Ausführungsform eines flächigen Bauteils mit einer integrierten Leuchteinrichtung.

Ein erfindungsgemäßes Möbelstück kann als ein Sitzmöbelstück oder Tischplatte oder dergleichen ausgebildet sein.

In den folgenden Ausführungsbeispielen wird ein kastenförmiges Sitzmöbelstück beschrieben, das mehrere Holzstreben 2 aus einem Massiv- oder Vollholzmaterial, beispielsweise Nadelholz oder sibirische Lärche, aufweist.

Das Sitzmöbelstück 1 weist mehrere flächige Bauteile auf, die als Sitzteil 3, Seitenteil 4, Rückenteil 5 und Vorderteil 6 ausgebildet sind. Diese Teile 3, 4, 5, 6 weisen jeweils mehrere Holzstreben 2 auf, wobei benachbarte Holzstreben 2 beabstandet zueinander unter Bildung eines Spalts 7 in einer Erstreckungsebene angeordnet sind.

Die Holzstreben 2 sind langgestreckt ausgebildet und weisen jeweils Flachseiten 8, längsseitige Schmalseiten 9 sowie stirnseitige Schmalseiten 10 auf. Eine Wanddicke w der Holzstreben 2, die durch einen Abstand der parallelen Flachseiten 8 derselben Holzstrebe 2 zueinander definiert ist, kann beispielsweise 60 mm betragen. Eine Länge I₁, I₂ der Holzstreben 2 kann beispielsweise 730 mm oder 530 mm betragen. Bei der Länge I₁ handelt es sich um Holzstreben 2 zur Bildung der gegenüberliegenden Seitenteile 4. Die Holzstreben 2 der Länge I₂ definieren eine Breite des Rückenteils 5 oder des Vorderteils 6. So ergibt sich eine Höhe h des Möbelstücks im Bereich von 620 mm, wobei das Rückenteil 5 sowie die Seitenteile 4 jeweils durch fünf schmalseitig übereinander angeordneten Holzstreben 2 gebildet ist.

Als Verbindungsmittel zur Verbindung benachbarter Holzstreben 2 ist eine Verbindungsstange 11 vorgesehen, die beispielsweise rohrförmig ausgebildet ist. Alternativ kann die Verbindungsstange 11 auch einen anderen Querschnitt aufweisen. Im vorliegenden Ausführungsbeispiel weist die Verbindungsstange eine Länge Iᵥ, die kleiner ist als eine doppelte Breite b der Holzstreben 2. Auf diese Weise greift die Verbindungsstange 11 lediglich in einen als Nut 12 ausgebildeten Hohlraum der Holzstreben 2 ein, wobei die Nut 12 auf einer dem benachbarten Holzstreben 2 zugewandten Schmalseite 9 angeordnet ist.

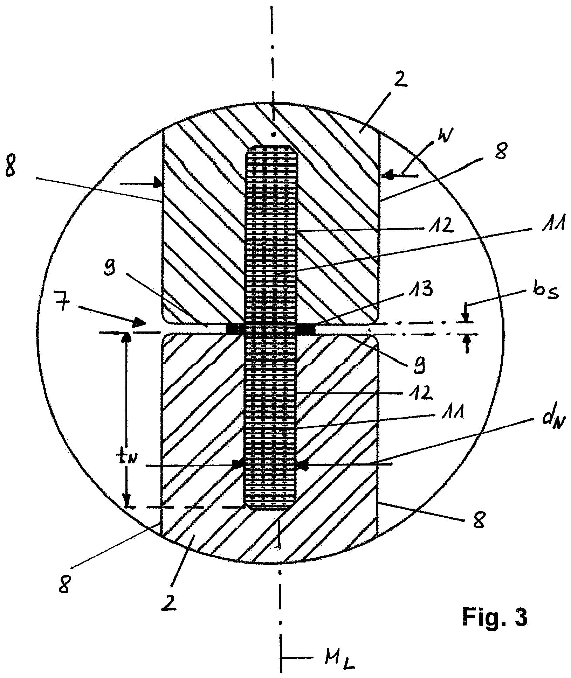

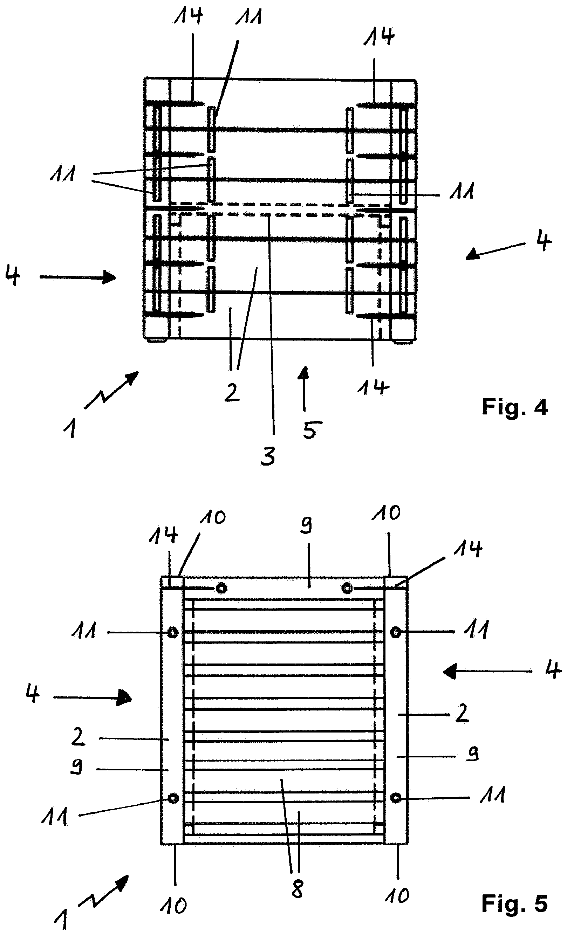

Wie insbesondere aus Figur 3 ersichtlich ist, können die Nuten 12 eine Nuttiefe t_{N} aufweisen, die kleiner ist als die gesamte oder halbe Breite b der Holzstreben 2. Auf diese Weise werden ausschließlich benachbarte Holzstreben 2 miteinander verbunden. Wie aus Figuren 4 ersichtlich ist, reicht es aus, wenn über die Länge I₁, I₂ der Holzstreben 2 lediglich an den längsseitigen Schmalseiten 9 zwei Nuten 12 angeordnet sind.

Die übereinander bzw. nebeneinander angeordneten Holzstreben 2 sind derart zueinander angeordnet, dass die zueinander gekehrten Nuten 12 derselben zueinander fluchten. Darüber hinaus sind die benachbarten Holzstreben 2 nach der ersten Ausführungsform der Erfindung derart zueinander angeordnet, dass die Flachseiten 8 derselben bündig zueinander angeordnet sind.

Im vorliegenden Ausführungsbeispiel wird die Nut 12 der Holzstreben 2 durch Fräsen einer Bohrung hergestellt, in die ein Teil, vorzugsweise ein halber Längsabschnitt der Verbindungsstange 11 eingreifen kann. Eine Quererstreckung bzw. ein Durchmesser d_{N} der Nut 12 ist derart ausgebildet, dass die Verbindungsstange 11 mit Spiel in die Nut 12 eingreifen kann. Die Verbindung zwischen der Verbindungsstange 11 und den zueinander gekehrten Holzstreben 2 wird durch Stoffschluss, insbesondere durch Verkleben, bewirkt. Hierzu wird vorzugsweise ein PU-Klebstoff eingesetzt.

Nachdem die eine Seite der Verbindungsstange 11 in die Nut 12 der einen Holzstrebe 2 eingesetzt worden ist, wird die Verbindungsstange 11, bevor die andere Seite der Verbindungsstange 11 in die Nut 12 der benachbarten Holzstrebe 12 eingesetzt wird, mit einem Distanzelement 13 beaufschlagt. Im vorliegenden Ausführungsbeispiel ist das Distanzelement 13 als eine Distanzscheibe ausgebildet, deren Innendurchmesser ein Aufstecken desselben auf die Verbindungsstange 11 mit Spiel erlaubt. Ein Außendurchmesser der Distanzscheibe 13 ist größer als ein Außendurchmesser der Verbindungsstange 11 bzw. der Nut 12, so dass eine Wanddicke der Distanzscheibe 13 eine Spaltbreite bₛ des Spaltes 7 festlegt. Es ergibt sich hierdurch ein definierter Abstand der zueinander gekehrten längsseitigen Schmalseiten 9 der benachbarten Holzstreben 2. Die Distanzscheibe 13 ist vorzugsweise aus einem Metallmaterial hergestellt. Die Verbindungsstange 11 ist vorzugsweise aus einem Metallmaterial hergestellt.

Beispielsweise kann die Verbindungsstange 11 als eine Gewindestange ausgebildet sein, so dass sie nach Vorbohrung der Nut 12 kraftschlüssig in die Nut 12 eingedreht werden kann. Auf eine Verklebung der Verbindungsstange 11 mit der Holzstrebe 2 kann hierbei verzichtet werden. Alternativ kann aber zusätzlich die Gewindestange auch noch in der Nut 12 mit der Holzstrebe 2 verklebt sein.

Wenn die Verbindungsstange 11 in der Nut 12 durch Verkleben gehalten ist, befindet sich eine Klebeschicht umfangsseitig der Verbindungsstange 11.

Das Distanzelement 13 weist eine Wandstärke im Bereich von 2 mm bis 20 mm auf.

Eine Quererstreckung bzw. der Durchmesser d_{N} der Verbindungsstange 11 und/oder der Nut 12 kann beispielsweise 0,5 cm und die Wanddicke w der Holzstreben 2 2 cm betragen. Die Quererstreckung d_{N} der Verbindungsstange 11 bzw. der Nut 12 ist somit kleiner als die Hälfte der Wandstärke w der Holzstrebe 2.

Nach einer bevorzugten Ausführungsform der Erfindung sind die Holzstreben 2 des Sitzteils 3 und/oder des Seitenteils 4 und/oder des Rückenteils 5 und/oder des Vorderteils 6 jeweils gleich ausgebildet. Da gleiche Distanzelemente 13 eingesetzt werden, ist die Spaltbreite bₛ der Teile 3, 4, 5, 6 ebenfalls gleich ausgebildet.

Zur Verbindung des Sitzteils 3 und des Seitenteils 4 und des Rückenteils 5 und des Vorderteils 6 zum Sitzmöbelstück 1 sind Holzbauschrauben als Befestigungsmittel 14 vorgesehen, die von einer Flachseite 8 der Holzstreben 2 unter Verbindung mit Holzstreben 2 des benachbarten Teils eingeschraubt werden.

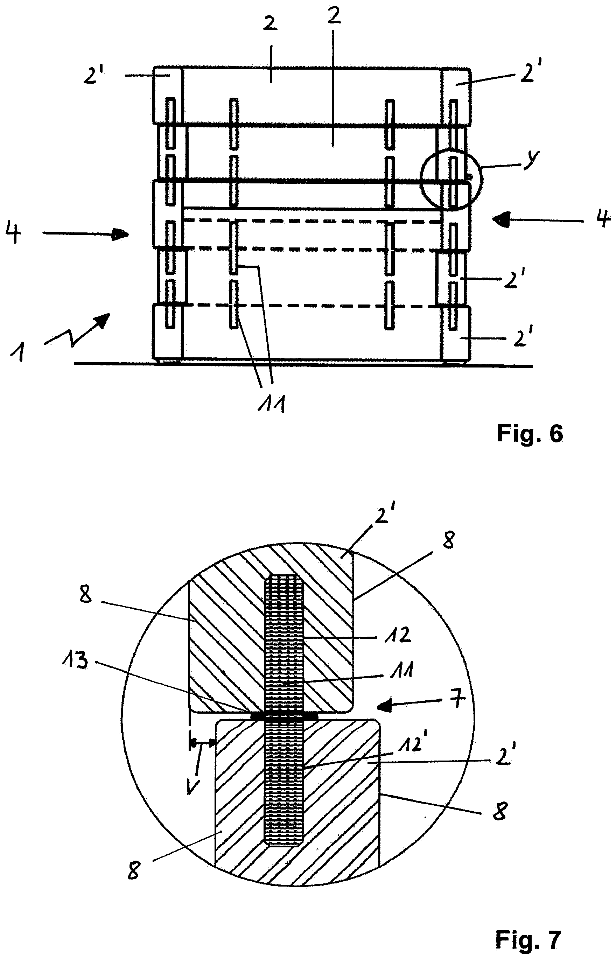

Nach einer zweiten Ausführungsform der Erfindung gemäß den Figuren 6 und 7 können Holzstreben 2' des Seitenteils 4 auch quer versetzt zueinander angeordnet sein, so dass ein Versatz V gebildet wird. Der Versatz V erstreckt sich in horizontaler Richtung und/oder quer zu Flachseiten 8 der Holzstreben 2'. Bei dieser Ausführungsform sind Nuten 12' bzw. die Verbindungsstange 11 außermittig der Holzstreben 2' angeordnet und nicht symmetrisch zu einer Längsmittelebene M_{L} der Holzstreben 2 ― wie nach der ersten Ausführungsform. Auf diese Weise kann ein anderes optisches Erscheinungsbild des Sitzmöbelstücks geschaffen werden, bei dem die Flachseiten 8 der benachbarten Holzstreben 2' nicht bündig zueinander verlaufen, sondern entsprechend des Versatzes V.

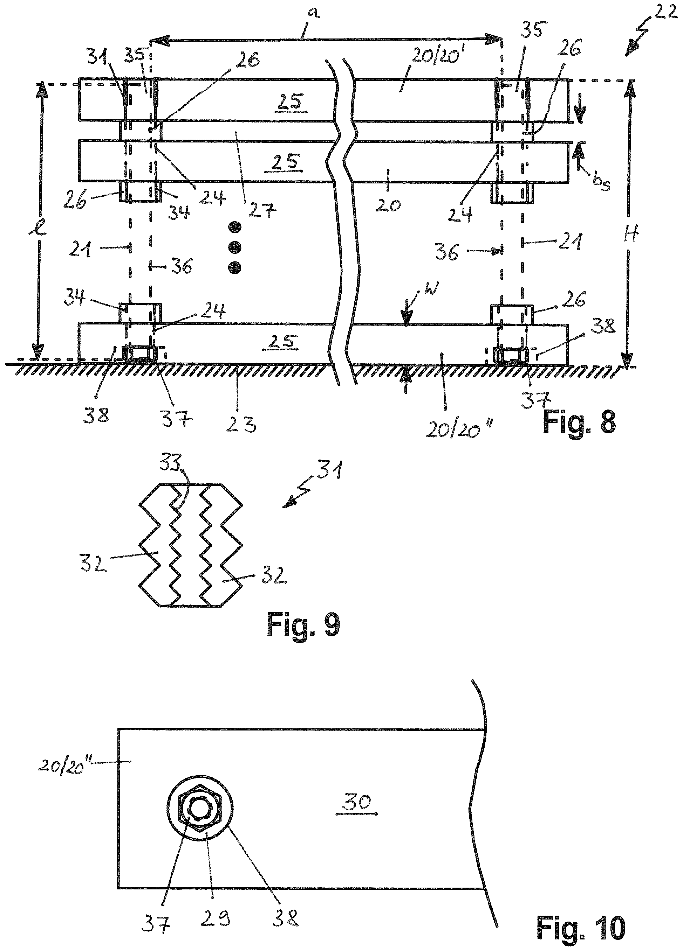

Nach einer alternativen Ausführungsform der Erfindung gemäß den Figuren 8 bis 12 können die Hohlräume der Holzstreben 20' auch durchgehend ausgebildet sein, so dass sich lediglich eine einzige Verbindungsstange zwischen den zu verbindenden Holzstreben 20' erstreckt. Lediglich die endseitigen Holzstreben 20' (obere Holzstrebe) und 20" (untere Holzstrebe) können, aber müssen nicht, lediglich mit einer Nut versehen sein, damit die Stirnseite der Verbindungsstange 21 nicht sichtbar ist.

In Figur 8 ist ein flächiges Bauteil 22 dargestellt, dessen Holzstreben 20 mittels einer Befestigungseinrichtung enthaltend eine Anzahl von in einem Abstand a zueinander angeordneten Verbindungsstangen 21 und weiteren Befestigungsmitteln in einer fixierten Lage zueinander angeordnet sind. Das Bauteil kann als ein Teil eines Möbelstücks, beispielsweise Sitzmöbelstücks oder einer Trennwandanordnung zur Abgrenzung von Raumbereichen auf Terrassen oder dergleichen ausgebildet sein. Als Möbelstück werden alle Anordnungen bezeichnet, die innerhalb und/oder außerhalb eines Hauses zur Komfortsteigerung des Bewohners dienen.

Handelt es sich bei dem Möbelstück beispielsweise um ein Sitzmöbelstück, kann das Bauteil 22 als Sitzteil und/oder als Seitenteil und/oder als Rückenteil und/oder als Vorderteil des Sitzmöbelstücks ausgebildet sein. Handelt es sich um eine Trennwandanordnung mit einer Mehrzahl von vertikalen Trennwänden, so werden die Trennwände jeweils durch ein einziges Bauteil 22 gebildet. In Figur 8 ist beispielsweise eine vertikal auf einem Boden 23 fixierte Trennwand 22 dargestellt. Der horizontale Abstand a der parallel zueinander angeordneten Verbindungsstangen 21, die jeweils als eine einzige Gewindestange ausgebildet sind, liegt in einem Bereich von 400 mm bis 500 mm. Die Holzstreben 20 weisen jeweils in dem Befestigungsbereich zueinander fluchtende Bohrungen 24 auf zur Aufnahme der Gewindestange 21. Lediglich die obere Holzstrebe 20' und/oder die untere Holzstrebe 20" der Holzstreben 20 kann alternativ eine nicht durchgehende Bohrung, nämlich eine zu der benachbarten Holzstrebe 20 hin geöffnete Nut oder Ausnehmung aufweisen zur Aufnahme eines Endes der Gewindestange 21.

Die Bohrungen 24 der Holzstreben 20 sind fluchtend zueinander angeordnet, wobei die Holzstreben 20 parallel zueinander jeweils in einer Erstreckungsebene verlaufen, bei der seitliche Längsseiten 25 der langgestreckten Holzstreben 20 bündig zueinander verlaufen. Im vorliegenden Ausführungsbeispiel sind die Holzstreben 20 in einem Abstand bₛ zueinander angeordnet, der durch Distanzelemente 26 bereichsweise ausgefüllt ist. Im vorliegenden Ausführungsbeispiel sind die Distanzelemente 26 blockförmig, insbesondere im Querschnitt rechteckförmig oder kreisförmig ausgebildet, so dass sich ein Schlitz 27 zwischen benachbarten Holzstreben 20 ergibt. Der Querschnitt des Distanzelementes 26 verläuft quer zu einer Achse der Gewindestange 21.

Die so gebildete Trennwand 22 besteht somit aus einer Mehrzahl von horizontal verlaufenden Holzstreben 20, wobei zwischen benachbarten Holzstreben 20 mit Ausnahme des Bereiches der Gewindestange 21 ein Freiraum gebildet wird. Die Trennwand 22 ermöglicht einen Sichtschutz, da der Abstand bₛ bzw. die Höhe bₛ der Distanzelemente 26 kleiner oder gleich einer Wanddicke w der Holzstreben 20. Im vorliegenden Ausführungsbeispiel ist die in vertikaler Richtung gerichtete Wanddicke w der Holzstreben 20 kleiner als eine in horizontaler Richtung verlaufende Breite b der Holzstreben 20. Die Wanddicke w der Holzstreben 20 kann in einem Bereich zwischen 25 mm und 45 mm betragen. Die Breite b der Holzstreben 20 kann in einem Bereich von 70 mm bis 100 mm betragen. Der lichte Abstand bₛ benachbarter Holzstreben 20 kann im Bereich von 25 mm bis 45 mm betragen.

Die Holzstreben 20 sind im Querschnitt rechteckförmig ausgebildet, wobei ein Abstand der beiden seitlichen Längsseiten 25 zueinander die Breite b und ein Abstand der oberen Längsseite 29 zu der unteren Längsseite 30 der Holzstrebe 20 die Wanddicke w vorgeben.

Wie sich beispielsweise aus Figur 8 ergibt, verlaufen die Bohrungen 24 der Holzstreben 20 jeweils zwischen der oberen Längsseite 29 und der unteren Längsseite 30 der Holzstrebe 20, die jeweils als Flachseiten ausgebildet sind. Die Fläche der oberen und unteren Längsseite 29, 30 ist wesentlich größer als die Fläche der seitlichen Längsseiten 25.

Die Befestigungseinrichtung zur Befestigung der Holzstreben 20 und der Distanzelemente 26 weist neben der Gewindestange 21 ein Gewindeeinsatzelement 31 auf, das vorzugsweise an der oberen Holzstrebe 20' befestigt ist. Das Gewindeeinsatzelement 31 ist als ein hülsenförmiger Körper ausgebildet, der über ein weitgängiges Außengewinde 32 und ein kurzgängiges Innengewinde 33 verfügt. Das Außengewinde 32 dient zur kraftschlüssigen Verbindung desselben mit der oberen Holzstrebe 20'. Zu diesem Zweck wird das Gewindeeinsatzelement 31 von der oberen Längsseite 29 (Flachseite) der Holzstrebe 20' her in die vorgefertigte Bohrung 24 derselben eingeschraubt, bis sich ein Stirnende des Gewindeeinsatzelementes 31 zumindest bündig zu der oberen Längsseite 29 der Holzstrebe 20' erstreckt. Bei relativ wandstarken Holzstreben 20 kann das Gewindeeinsatzelement 31 auch innerhalb der Bohrung 24 beabstandet von der oberen Längsseite 29 angeordnet sein.

In einem weiteren Montageschritt wird nun die Gewindestange 21 durch die Bohrungen 24 der Holzstreben 20 und Bohrungen 34 der Distanzelemente 26 durchgesteckt, bis ein Ende 35 der Gewindestange 21 das Gewindeeinsatzelement 31 erreicht. Im Folgenden kann nun die Gewindestange 21, die ein Außengewinde 36 aufweist, in Gewindeeingriff mit dem Gewindeeinsatzelement 31 verbracht werden. Hierbei steht das Außengewinde 36 der Gewindestange 21 im Gewindeeingriff mit dem Innengewinde 33 des Gewindeeinsatzelementes 31. Das Innengewinde 33 des Gewindeeinsatzelementes 31 ist somit auf das Außengewinde 36 der Gewindestange 21 abgestimmt.

Nach der Befestigung an dem ersten Befestigungsort im Bereich der oberen bzw. der ersten endseitigen Holzstrebe 20' erfolgt nun die Befestigung an einem zweiten Befestigungsort, der sich im Bereich der zweiten endseitigen bzw. unteren Holzstrebe 20" befindet. Da eine Länge I der Gewindestange 21 auf eine gewünschte Höhe H des Bauteils 22 abgestimmt ist, d. h. eine Länge I der Gewindestange 21 ist gleich oder kleiner als die Höhe H des Bauteils 22, wird nun am zweiten Befestigungsort eine Befestigungsmutter 37 in einer Aussparung 38 der unteren Holzstrebe 20" eingesetzt und auf das gegenüberliegende Ende der Gewindestange 21 aufgeschraubt. Die Befestigungsmutter 37 übt eine in Längsrichtung der Gewindestange 21 verlaufende Haltekraft auf die Holzstreben 20 bzw. Distanzelemente 26 aus, so dass diese gegen einander verspannt bzw. verpresst werden. Die Befestigungsmutter 37 stützt sich dabei auf einen Boden 29 der Aussparung 33 ab, der als Anschlag dient.

Eine in Axialrichtung der Gewindestange 21 verlaufende Tiefe der Aussparung 38 ist so groß gewählt, dass die Befestigungsmutter 37 in die Aussparung 38 vollständig eintauchen kann. Folglich kann die untere Holzstrebe 20' mit ihrer unteren Längsseite 30 bündig auf dem eben ausgebildeten Boden 23 angesetzt werden.

Die Anzahl der Holzstreben 20 je flächenhaften Bauteils 22 sind vorzugsweise gleich ausgebildet. Die Befestigung der Holzstreben 20 in einem vorgesehenen in Längsrichtung der Holzstreben 20 verlaufenden Abstand a erfolgt auf gleiche Weise.

Es versteht sich, dass die Bohrung 24 der Holzstreben 20 und des Distanzelementes 26 einen größeren Durchmesser aufweisen als ein Durchmesser der Gewindestange 21, beispielsweise 0,5 mm größer. Auf diese Weise kann die Gewindestange 21 mit Spiel durch die entsprechenden Bohrungen hindurchgesteckt bzw. eingesetzt werden.

Zur kraftschlüssigen Befestigung des so gebildeten flächigen Bauteils 22 in einer vertikalen Lage desselben, beispielsweise zur Bildung einer Trennwand, ist eine Bodenverankerungseinrichtung 40 vorgesehen. Die Bodenverankerungseinrichtung 40 umfasst ein in den Boden 23 einsetzbares Einsetzelement 41, das ein Innengewinde 42 aufweist. Zusätzlich weist die Bodenverankerungseinrichtung 40 einen Anker 43 auf, der als Gewindezapfen ausgebildet ist. Der Anker 43 weist ein Außengewinde 44 auf, so dass der Anker 43 in Schraubeingriff mit dem Einsatzelement 41 bringbar ist. Ein oberer Abschnitt des Ankers 43 ist in einer Verankerungsbohrung 45 der unteren Holzstrebe 20" eingelassen, wobei die untere Holzstrebe 20" auf einer dem Einsetzelement 41 abgewandten Seite eine Aussparung 46 für eine Verankerungsmutter 47 aufweist. Die Verankerungsmutter 47 weist ein auf das Außengewinde 44 Ankers 43 angepasstes Innengewinde auf, so dass es durch Anziehen die untere Holzstrebe 20' gegen den Boden 23 verpressen kann.

Vorzugsweise befindet sich die Bodenverankerungseinrichtung 40 in einem Abstand zu dem zweiten Befestigungsort, in dem sich die Gewindestange 21 befindet.

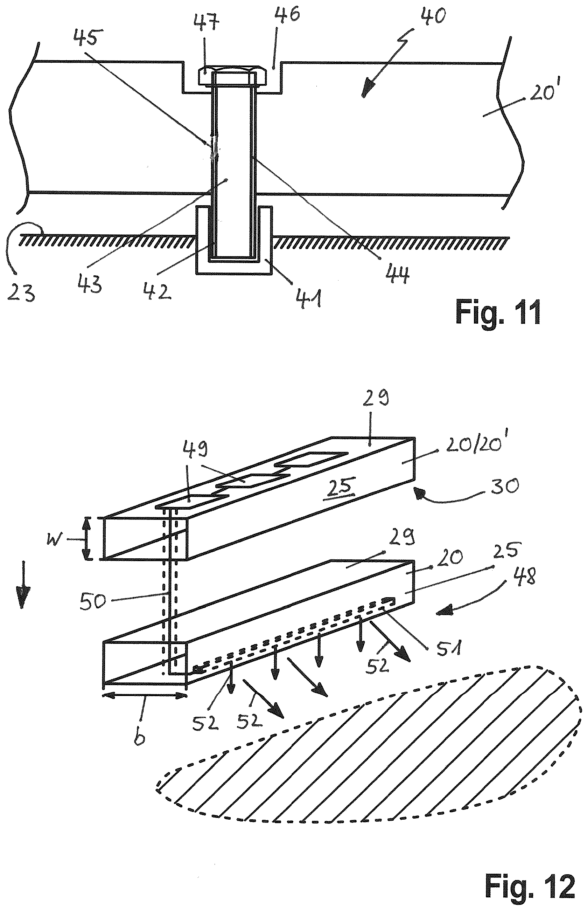

Nach einer weiteren Ausführungsform der Erfindung gemäß Figur 12 kann in dem flächenhaftigen Bauteil 22 zusätzlich eine Leuchteinrichtung 48 integriert sein. Die Leuchteinrichtung 48 umfasst eine Anzahl von Solarelementen 49, die vorzugsweise ausschließlich an der oberen Längsseite 29 der oberen Holzstrebe 20' befestigt sind. Die Solarelemente 49 können beispielsweise als flache Solarpanels ausgebildet sein, die verteilt an der oberen Längsseite 29 der oberen Holzstrebe 20' befestigt sind. Die Solarelemente 49 bestehen aus einer Anzahl von Solarzellen, die Strahlungsenergie direkt in elektrische Energie umwandeln. Mittels einer Stromleitung 50 (Kabel), das gegebenenfalls durch hierfür vorgesehene Bohrungen der Holzstreben 20 verläuft, wird die elektrische Energie zu einer Leuchtleiste 51 übertragen, die sich in Längsrichtung der Holzstrebe 20 an der seitlichen Längsseite 25 und/oder der unteren Längsseite 30 einer der Holzstreben 20 befestigt ist. Die Leuchtleiste 41 weist eine Anzahl von Lichtquellen, vorzugsweise LED-Lichtquellen, auf. Ist die Lichtleiste 41 beispielsweise an der unteren Längsseite 30 einer der oberen Holzstreben 20 angeordnet, wird das von der Leuchtleiste 51 abgegebene Licht 52 nach unten in Richtung des Bodens 23 abgestrahlt. Auf diese Weise erscheint für den Betrachter nicht nur eine entsprechende langgestreckte Leuchtfläche oder Leuchtstab an der Holzstrebe 20, sondern darüber hinaus wird auch der Boden 23 neben der Trennwand bzw. dem flächigen Bauteil 22 ausgeleuchtet. Vorteilhaft lässt sich hierdurch eine farbliche Gestaltung der Holzstreben 20 erzielen, wenn die eine Leuchtleiste 51 Licht einer ersten Farbe und die andere Leuchtleiste 51 einer anderen Holzstrebe 20 Licht einer anderen Farbe abstrahlt.

Zusätzlich können der Leuchtleiste 51 ein Akkumulator und ein Laderegler zugeordnet sein, so dass das Licht 52 auch abgestrahlt werden kann, wenn die Strahlungsleistung aus der Umgebung nicht zur Verfügung steht.

Nach der Ausführungsform gemäß Figur 12 ist die Leuchtleiste 51 aufweisende Holzstrebe 20 seitlich versetzt zu den weiteren benachbarten Holzstreben 20 angeordnet, so dass mittels der an der unteren Längsseite 30 angeordneten Leuchtleiste 51 ein relativ großer Bereich des Bodens 23 beleuchtet werden kann.

Nach einer alternativen Ausführungsform der Erfindung gemäß Figur 12 kann die Leuchteinrichtung statt der Leuchtleiste eine Leuchttafel aufweisen, die an seitlichen Längsseiten 25 der Holzstreben 20 angeordnet ist. Die Leuchttafel überstreicht mehrere seitliche Längsseiten 25 dieser Holzstreben 20, so dass sie relativ großflächig ist. Eine Deckseite der Leuchttafel ist mit einer Beschriftung oder mit Zeichen versehen, so dass die innerhalb der Leuchttafel angeordneten Lichtquellen zur Hinterleuchtung dieser Beschriftung oder Zeichen dienen. Die Leuchttafel kann zu Informations- und/oder Werbezwecken und/oder als Dekoration der Trennwand oder des Sitzmöbels oder dergleichen eingesetzt werden.

Alternativ kann die Leuchteinrichtung 48 auch Sitzmöbeln zugeordnet sein.

Nach einer weiteren Ausführungsform der Erfindung können die vorgenannten Holzstreben 2, 20 der Ausführungsbeispiele an den Oberflächen mit einem Holzöl behandelt sein. Alternativ können die Holzstreben 2, 20 auch mit einem wasserbasierten Acrylat-Lack beschichtet sein.

Nach einer alternativen Ausführungsform können die Verbindungsstangen 11 auch aus einem Holzmaterial bestehen.

Alternativ können die Verbindungsstangen 11 auch einen rechteckförmigen oder quadratischen Querschnitt aufweisen.

## Patentansprüche

1. Möbelstück, insbesondere Sitzmöbelstück, mit mehreren beabstandet zueinander angeordneten Holzstreben ('20, 20', 20"), die zur Bildung eines flächigen Bauteils (3, 4, 5, 6) über Verbindungsmittel miteinander gekoppelt sind, dass als Verbindungsmittel eine Gewindestange (21) vorgesehen ist, die in einen Hohlraum der Holzstrebe ('20, 20', 20") fixiert angeordnet ist, wobei der Hohlraum von benachbarten Holstreben ('20, 20', 20") fluchtend zueinander angeordnet sind, **dadurch gekennzeichnet, dass** der Hohlraum der Holzstreben (20) als eine durchgehende Bohrung (24) ausgebildet ist, die sich zwischen zwei gegenüberliegenden Flachseiten (29, 30) der Holzstrebe (20) erstreckt, und dass die Bohrungen (24) der in einer Erstreckungsebene verlaufenden Holzstreben (20) fluchtend zueinander angeordnet sind zur Aufnahme der Gewindestange (21), dass eine erste endseitige Holzstrebe (20') des flächigen Bauteils (22) ein Gewindeeinsatzelement (31) aufweist, das ein weitgängiges Außengewinde (32) zur Verbindung mit der Bohrung (24) der ersten endseitigen Holzstrebe (20') und ein kurzgängiges Innengewinde (33) zur Verbindung mit einem ersten Ende der Gewindestange (21) aufweist, und dass eine zweite endseitige Holzstrebe (20") desselben flächigen Bauteils (22) eine Aussparung (38) zur Aufnahme einer Befestigungsmutter (37) aufweist, die in einer Montagestellung des flächigen Bauteils (22) in Schraubverbindung mit einem zweiten Ende der Gewindestange (21) steht.

2. Möbelstück nach Anspruch 1, **dadurch gekennzeichnet, dass** eine in vertikaler Richtung gerichtete Wanddicke (w) der Holzstreben (20) kleiner ist als eine in horizontaler Richtung verlaufende Breite (b) der Holzstreben (20), wobei die Wanddicke (w) der Holzstreben (20) in einem Bereich zwischen 25 mm und 45 mm und die Breite (b) der Holzstreben (20) in einem Bereich von 70 mm bis 100 mm beträgt, und dass ein lichter Abstand (bₛ) benachbarter Holzstreben (20) in einem Bereich von 25 mm bis 45 mm beträgt.

3. Möbelstück nach Anspruch 1 oder 2, **dadurch gekennzeichnet, dass** die Holzstreben ('20, 20', 20") aus einem Naturholz- und/oder Massivholzmaterial bestehen.

4. Möbelstück nach einem der Ansprüche 1 bis 3, **dadurch gekennzeichnet, dass** die Gewindestange (21) im Bereich eines Schlitzes (27) von einem Distanzelement (26) umgeben ist.

5. Möbelstück nach einem der Ansprüche 1 bis 4, **dadurch gekennzeichnet, dass** die Bohrung (24) der Holzstreben (20) einen größeren Durchmesser aufweisen als die Gewindestange (21), so dass die Gewindestange (21) mit Spiel in die zueinander fluchtenden Bohrungen (24) der Holzstreben (20) einsetzbar und/oder durchsteckbar ist.

6. Möbelstück nach einem der Ansprüche 1 bis 5, **dadurch gekennzeichnet, dass** zumindest eine obere endseitige Holzstrebe (20') des flächigen Bauteils (22) an einer Flachseite (28, 29) mit Solarelementen (49) versehen ist als elektrische Energiequelle für eine Leuchtleiste (51), die sich in Längsrichtung der Holzstrebe (20) an einer seitlichen Längsseite (25) und/oder unteren Längsseite (30) der Holzstrebe (20) erstreckt, oder für eine mit einer Beschriftung und/oder einem Zeichen versehenen Leuchttafel, die an seitlichen Längsseiten (25) mehrere Holzstreben (20) angeordnet ist.

7. Möbelstück nach einem der Ansprüche 1 bis 6, **dadurch gekennzeichnet, dass** eine Bodenverankerungseinrichtung (40) vorgesehen ist, die ein Einsetzelement (41) mit einer Außenmantelfläche zur kraftschlüssigen und/oder formschlüssigen oder stoffschlüssigen Einbringen in den Boden (23) und mit einem Innengewinde (42) zur Schraubverbindung mit einem Anker (43) aufweist einerseits und die den Anker (43) aufweist andererseits, der in einer Verankerungsbohrung (45) der untersten Holzstrebe (20") des Bauteils (22) durchgreift und mit einer Ankermutter (47) an einer Oberseite der unteren Holzstrebe (20") in Schraubeingriff steht.

8. Möbelstück nach einem der Ansprüche 1 bis 7, **dadurch gekennzeichnet, dass** das flächige Bauteil (22) als eine Trennwand oder als eine Dachwand oder als ein Teil eines Sitzmöbels (1) ausgebildet.

9. Möbelstück nach einem der Ansprüche 1 bis 8, **dadurch gekennzeichnet, dass** eine Oberfläche der Holzstrebe (20) mit einem Holzöl versehen ist oder dass die Holzstrebe (20) mit einem wasserbasiertem Acrylat-Lack beschichtet ist.

## Claims

1. A piece of furniture, in particular seating furniture, having several wooden struts ('20, 20', 20") arranged spaced apart from each other which are coupled to each other via connection means to form a flat component (3, 4, 5, 6), wherein a threaded rod (21) which is fixedly arranged in a cavity of the wooden struts ('20, 20', 20") is provided as the connection means, wherein the cavities of neighboring wooden struts ('20, 20', 20") are arranged such that they are aligned with each other, **characterized in that** the cavity of the wooden struts (20) is formed as a continuous bore (24) which extends between two opposing flat sides (29, 30) of the wooden strut (20), and **in that** the bores (24) of the wooden struts (20) extending in the plane of extent are arranged such that they are aligned with each other for receiving the threaded rod (21), **in that** a first end-side wooden strut (20') of the flat component (22) has a threaded insert (31) having a wide-pitch external thread (32) for connection with the bore (24) of the first end-side wooden strut (20') and a narrow-pitch internal thread (33) for connection with a first end of the threaded rod (21), and **in that** a second end-side wooden strut (20") of the same flat component (22) has a recess (38) for receiving an attachment nut (37) which is in screwed connection with a second end of the threaded rod (21) in an assembly position of the flat component (22).

2. The piece of furniture according to Claim 1, **characterized in that** a vertically aligned wall thickness (w) of the wooden struts (20) is smaller than a horizontally aligned thickness (b) of the wooden struts (20), wherein the wall thickness (w) of the wooden struts (20) is in a range between 25 mm and 45 mm and the thickness (b) of the wooden struts (20) is in a range from 70 mm to 100 mm, and **in that** a clear distance (bₛ) of neighboring wooden struts (20) is in a range from 25 mm to 45 mm.

3. The piece of furniture according to Claim 1 or 2, **characterized in that** the wooden struts ('20, 20', 20") consist of a natural wood and/or solid wood material.

4. The piece of furniture according to any one of Claims 1 to 3, **characterized in that** the threaded rod (21) is surrounded by a distance element (26) in the region of a slit (27).

5. The piece of furniture according to any one of Claims 1 to 4, **characterized in that** the bores (24) of the wooden struts (20) have a larger diameter than the threaded rod (21) such that the threaded rod (21) is insertable and/or pluggable with clearance into the bores (24) of the wooden struts (20) aligned with each other.

6. The piece of furniture according to any one of Claims 1 to 5, **characterized in that** at least one upper end-side wooden strut (20') of the flat component (22) is provided with solar elements (49) at one flat side (28, 29) as an electrical energy source for a light bar (51) which extends in the longitudinal direction of the wooden strut (20) at a lateral long side (25) and/or lower long side (30) of the wooden strut (20), or for a light panel provided with a label and/or a symbol, said light panel being arranged at lateral long sides (25) of several wooden struts (20).

7. The piece of furniture according to any one of Claims 1 to 6, **characterized in that** a ground anchoring device (40) is provided which has, on the one hand, an insertion element (41) with an outer circumferential surface for frictional and/or positive or material introduction into the ground (23) and with an internal thread (42) for screwed connection with an anchor (43) and has, on the other hand, the anchor (43) which reaches through an anchoring bore (45) of the lowest wooden strut (20") of the component (22) and is in screwed engagement with an anchor nut (47) at an upper side of the lower wooden strut (20").

8. The piece of furniture according to any one of Claims 1 to 7, **characterized in that** the flat component (22) is formed as a partition or as a roof wall or as a part of a seating furniture piece (1).

9. The piece of furniture according to any one of Claims 1 to 8, **characterized in that** a surface of the wooden strut (20) is provided with a wood oil or **in that** the wooden strut (20) is coated with a water-based acrylate polish.

## Revendications

1. Meuble, en particulier un meuble servant de siège, avec plusieurs entretoises en bois ('20, 20', 20") disposées à distance l'une de l'autre, qui sont reliées l'une à l'autre par des moyens de connexion pour former un élément plat (3, 4, 5, 6), dans lequel une tige filetée (21) est prévue comme moyen de connexion, qui est disposée dans une cavité de l'entretoise en bois ('20, 20', 20") de manière à y être fixée, dans lequel les cavités des entretoises en bois adjacentes ('20, 20', 20") sont disposées de manière à affleurer les unes aux autres, **caractérisé en ce que** la cavité des entretoises en bois (20) est formée comme un alésage traversant (24), qui s'étend entre deux faces planes opposées (29, 30) de l'entretoise en bois (20), et que les alésages (24) des entretoises en bois (20) passant dans un plan d'extension sont disposés de manière à affleurer les uns aux autres pour recevoir la tige filetée (21), qu'une première entretoise en bois d'extrémité (20') de l'élément de construction plat (22) présente un élément à embout fileté (31), qui présente un filetage extérieur à pas large (32) à relier à l'alésage (24) de la première entretoise en bois d'extrémité (20') et un filetage intérieur à pas fin (33) à relier à une première extrémité de la tige filetée (21), et qu'une seconde entretoise en bois d'extrémité (20") du même élément plat (22) présente un évidement (38) pour recevoir un écrou de fixation (37), qui est connecté par vissage à une seconde extrémité de la tige filetée (21) dans une position de montage de l'élément plat (22).

2. Meuble selon la revendication 1, **caractérisé en ce qu'**une épaisseur de paroi (w) dirigée à la verticale des entretoises en bois (20) est plus petite qu'une largeur (b) s'étendant à l'horizontale des entretoises en bois (20), dans lequel l'épaisseur de paroi (w) des entretoises en bois (20) varie dans une plage comprise entre 25 mm et 45 mm et la largeur (b) des entretoises en bois (20) se situe dans une plage de 70 mm à 100 mm, et qu'un écartement libre (bₛ) d'entretoises en bois adjacentes (20) fluctue dans une plage de 25 mm à 45 mm.

3. Meuble selon la revendication 1 ou 2, **caractérisé en ce que** les entretoises en bois ('20, 20', 20") sont constituées d'une matière en bois massif et/ou en bois naturel.

4. Meuble selon l'une des revendications 1 à 3, **caractérisé en ce que** la tige filetée (21) est entourée d'un élément d'espacement (26) dans la zone d'une fente (27).

5. Meuble selon l'une des revendications 1 à 4, **caractérisé en ce que** les alésages (24) des entretoises en bois (20) présentent un plus grand diamètre que la tige filetée (21), de sorte que la tige filetée (21) est insérable dans les alésages (24) affleurant les uns aux autres des entretoises en bois (20) et/ou peut les traverser avec du jeu.

6. Meuble selon l'une des revendications 1 à 5, **caractérisé en ce qu'**au moins une entretoise en bois d'extrémité supérieure (20') de l'élément de plat (22) est munie d'éléments solaires (49) sur une face plane (28, 29) servant de source d'énergie électrique à une barrette lumineuse (51), qui s'étend dans le sens longitudinal de l'entretoise en bois (20) sur un grand côté latéral (25) et/ou sur un grand côté inférieur (30) de l'entretoise en bois (20), ou à un tableau lumineux pourvu d'une inscription et/ou d'un signal, qui est disposé sur de grands côtés latéraux (25) de plusieurs entretoises en bois (20).

7. Meuble selon l'une des revendications 1 à 6, **caractérisé en ce qu'**un dispositif d'ancrage au sol (40) est prévu, qui présente d'une part un élément d'insertion (41) avec une surface d'enveloppe extérieure servant à l'introduction dans le sol (23) par adhérence et/ou par complémentarité de forme ou par liaison de matière et avec un filetage intérieur (42) servant au connexion vissé à une tige d'ancrage (43) et qui présente d'autre part la tige d'ancrage (43), qui traverse un alésage d'ancrage (45) de l'entretoise en bois la plus basse (20") de l'élément (22) et est en prise par vissage avec un écrou d'ancrage (47) à une face supérieure de l'entretoise inférieure (20").

8. Meuble selon l'une des revendications 1 à 7, **caractérisé en ce que** l'élément plat (22) est formée comme une paroi de séparation ou d'une paroi de toit ou d'une partie d'un meuble servant de siège (1).

9. Meuble selon l'une des revendications 1 à 8, **caractérisé en ce qu'**une surface de l'entretoise en bois (20) est imprégnée d'une huile pour bois ou que l'entretoise en bois (20) est revêtue d'une laque acrylique à base aqueuse.
